# EUROPEAN PATENT APPLICATION

(11) **EP 3 188 444 A1**
(43) Date of publication of application: **05.07.2017**
(21) Application number: 14882019.4
(22) Date of filing: 23.10.2014
(51) Int. Cl.: H04L 29/08

(54) **SOFTWARE DEFINED NETWORK-BASED DATA MANAGEMENT METHOD AND SYSTEM, AND STORAGE MEDIUM**

(30) Priority: 25.08.2014 CN 201410420974
(71) Applicant: ZTE Corporation, Shenzhen, Guangdong 518057 (CN)
(72) Inventor: DAI, Xianxian, Shenzhen Guangdong 518057 (CN); FENG, Chong, Shenzhen Guangdong 518057 (CN); JIN, Feicai, Shenzhen Guangdong 518057 (CN)
(74) Representative: Brevalex
(86) International application number: PCT/CN2014/089296
(87) International publication number: WO 2015/117402

(57) **Abstract**

The disclosure provides a Software Defined Network, SDN-based data management method and system, and a computer storage medium. The method includes: a client and a proxy server perform capability negotiation therebetween (S100); when it is determined through the capability negotiation that both the client and the proxy server support the operable-ephemeral data capability, the client sends to the proxy server a retrieving or modifying operation message (S101); and the proxy server receives the operation message and performs a corresponding operation on the data of an ephemeral data set according to the operation message (S102).

## Description

### TECHNICAL FIELD

The disclosure relates to the technology of a Software Defined Network, SDN, and in particular to a SDN-based data management method and system, and a computer storage medium.

### BACKGROUND

SDN is a novel network innovation architecture. The core idea of the SDN is to realize the flexible control and management of the network by separating the network forwarding plane from the network control plane.

In the implementation of the SDN, Network Configuration, NETCONF, is a protocol for solving the network configuration based on the Remote Procedure Call Protocol, RPC, proposed by Internet Engineering Task Force, IETF. NETCONF is a protocol for requesting services over a network from a remote computer program without the knowledge of the underlying network technology. In short, NETCONF provides a simple transport protocol-independent mechanism for encapsulating, by using the <rpc> and <rpc-reply> elements, the request and response data for the client and the proxy server that intend to operate the network. Normally, the client encapsulates the data required by the client or the prompt message for the successful configuration into the <rpc-reply> element. In this way, when the client request message is incorrect or the proxy server process is unsuccessful, the proxy server encapsulates an <rpc-error> element containing detailed error information into the <rpc-reply> element, and return the <rpc-reply> element to the client. Therefore, the NETCONF is used as a network interface to increase, delete, modify and retrieve the network configuration data to adapt to network automation.

However, at present, NETCONF only is used in the configuration field, and it cannot flexibly retrieve or modify the data in the SDN due to insufficient support on the level of network operation to achieve the real-time and effective management of the network device in the SDN.

### SUMMARY

The embodiment of the disclosure provides a SDN-based data management method and system, and a computer storage medium, which can retrieve or modify the data in the SDN by the operable-ephemeral data capability and further achieve the real-time and effective management of the network device in the SDN.

The technical solutions of the embodiment of the disclosure are implemented as follows.

The embodiments of the disclosure provide a SDN-based data management method, including:
performing, by a client and a proxy server, capability negotiation therebetween;
when it is determined through the capability negotiation that both the client and the proxy server support the operable-ephemeral data capability, sending, by the client, to the proxy server an operation message; and
receiving, by the proxy server, the operation message, and performing a corresponding operation on the data of an ephemeral data set according to the operation message.

In an embodiment, the operation message is the data item information for retrieving the ephemeral data set; and the data item information for retrieving the ephemeral data set includes an operation type, an action domain, and content to be retrieved.

In the embodiment, the step of performing, by the proxy server, a corresponding operation on the data of an ephemeral data set according to the operation message includes: performing, by the proxy server, a corresponding operation on the data of an ephemeral data set according to the data item information for retrieving the ephemeral data set.

In an embodiment, the step of performing, by the proxy server, a corresponding operation on the data of an ephemeral data set according to the data item information for retrieving the ephemeral data set includes: identifying, according to the operation type, that a retrieving operation is to be performed; determining the node to be retrieved, to which the content to be retrieved belongs, of the ephemeral data set according to the action domain; collecting the data of the node to be retrieved according to the content to be retrieved; and forming an operation response message by using the collected data according to the format of the message.

In an embodiment, the operation message is the data item information for modifying the ephemeral data set; and the data item information for modifying the ephemeral data set includes an operation type, an action domain, content to be modified, an error option, a test option of the modifying operation.

In the embodiment, the step of sending, by the client, the operation message to the proxy server including: sending, by the client, to the proxy server the data item information for modifying the ephemeral data set.

In the embodiment, the step of performing, by the proxy server, a corresponding operation on the data of an ephemeral data set according to the operation message including: performing, by the proxy server, a corresponding operation on the data of an ephemeral data set according to the data item information for modifying the ephemeral data set.

In an embodiment, before the client sends to the proxy server the data item information for modifying the ephemeral data set, the method further includes: sending, by the client, to the proxy server an operation message for locking the ephemeral data set; receiving, by the proxy server, the operation message for locking the ephemeral data set; performing a locking operation on the data of the ephemeral data set according to the operation message for locking the ephemeral data set; and returning to the client a response message indicating that the locking operation is successful when the locking operation is performed successfully.

In an embodiment, the step of performing, by the proxy server, a corresponding operation on the data of an ephemeral data set according to the data item information for modifying the ephemeral data set including: identifying that a modifying operation is to be performed according to the operation type; determining the node to be modified, to which the content to be modified belongs, of the ephemeral data set according to the action domain; performing the modifying operation on data of the node to be modified according to the test option, the error option, and the content to be modified of the modifying operation; and recording the result of the modifying operation.

In an embodiment, the method further includes: returning, by the proxy server, to the client the result of the modifying operation; sending, by the client, to the proxy server an operation message for unlocking the ephemeral data set; receiving, by the proxy server, the operation message for unlocking the ephemeral data set; performing, by the proxy server, an unlocking operation on the data of the ephemeral data set according to the operation message for unlocking the ephemeral data set; and returning, by the proxy server, to the client a response message indicating that the unlocking operation is successful when the unlocking operation is performed successfully.

The embodiments of the disclosure also provide a SDN-based data management system, including: a client and a proxy server.

The client is arranged to perform capability negotiation with the proxy server; when it is determined through the capability negotiation that both the client and the proxy server support the operable-ephemeral data capability, send to the proxy server an operation message.

The proxy server is arranged to perform capability negotiation with the client; receive the operation message; and perform a corresponding operation on the data of an ephemeral data set according to the operation message.

The embodiment of the disclosure also provides a computer storage medium having stored computer-executable instructions for executing the SDN-based data management method described in the embodiment of the disclosure.

According to the SDN-based data management method and system, and the computer storage medium provided by the embodiment of the disclosure, a client and a proxy server perform capability negotiation therebetween; when it is determined through the capability negotiation that both the client and the proxy server support the operable-ephemeral data capability, the client sends to the proxy server an operation message; and the proxy server receives the operation message and performs a corresponding operation on the data of an ephemeral data set according to the operation message. In this way, the operable-ephemeral data capability achieves the operations such as retrieving or modifying the data of the ephemeral data set that supports creating, retrieving, updating, and deleting in the SDN to achieve the real-time and effective management of the network device in the SDN.

### BRIEF DESCRIPTION OF THE DRAWINGS

Fig. 1 is a flow chart of implementing the SDN-based data management method according to an embodiment of the disclosure;
Fig. 2 is a flow chart of implementing the retrieving operation of the SDN-based data management method according to an embodiment of the disclosure;
Fig. 3 is a flow chart of implementing the modifying operation of the SDN-based data management method according to an embodiment of the disclosure; and
Fig. 4 is a schematic diagram of the structure of the SDN-based data management system according to an embodiment of the disclosure.

### DETAILED DESCRIPTION

In the embodiment of the disclosure, a client and a proxy server perform capability negotiation therebetween; when it is determined through the capability negotiation that both the client and the proxy server support the operable-ephemeral data capability, the client sends to the proxy server an operation message; and the proxy server receives the operation message and performs a corresponding operation on the data of an ephemeral data set according to the operation message.

Herein, the data of the ephemeral data set refers to data generated after the device is started up, wherein the data can be read or modified, and after the device is restarted, the data will be lost due to being unsaved.

In the embodiment of the disclosure, in the definition of the service model, the parameter <ephemeral> for a node is created. The type of the parameter is Boolean. TRUE indicates that the node can be read and modified, and FALSE indicates that the node is read-only.

For example, in a traditional network environment, the user updates the network topology through routing configuration protocols such as Interior Gateway Protocol, IGP, Border Gateway Protocol, BGP, or the like. Theoretically, after modifying the routing protocol configuration, calculation will be performed to generate a lot of data of table item related to routing forwarding, such as a destination address, a subnet mask address, an outgoing interface index, an address of a next hop, a priority, a metric, etc. These data are not persistent and are readable and writable. However, it is to be noted that, in the traditional art, these data cannot be directly modified. Specifically, the data will be updated by performing calculation after modifying the relevant routing protocol configuration again. The data will be lost after the device is restarted. Some or all of the information in the data can be retrieved in a manner such as a command line, SNMP and the like. In addition, in the SDN network, for the user open interface, the user can access and manipulate the data of this part in a certain way. The data of this part will belong to the ephemeral data set, also known as an ephemeral data set. When the data of this part can be directly modified and updated, the value of the node parameter <ephemeral> is TRUE, and when the data of this part is read-only data, the value of the node parameter <ephemeral> is FALSE.

As another example, the relevant login information and data, such as the user name, the login manner, the number of the client port, the login IP address, the online time, the idle time, the login time, or the like, will be used when users accesses the proxy server via TELNET, SNMP, FTP or the like. These data will not be persistent, and are read-only data. Specifically, once the user goes online, the data is generated immediately and cannot be modified, and once the user is offline or the device is restarted, the data will be lost. Therefore, these data belong to the ephemeral data set, and the value of the node parameter <ephemeral> is FALSE.

The disclosure will now be described in further detail with reference to the accompanying drawings and specific examples.

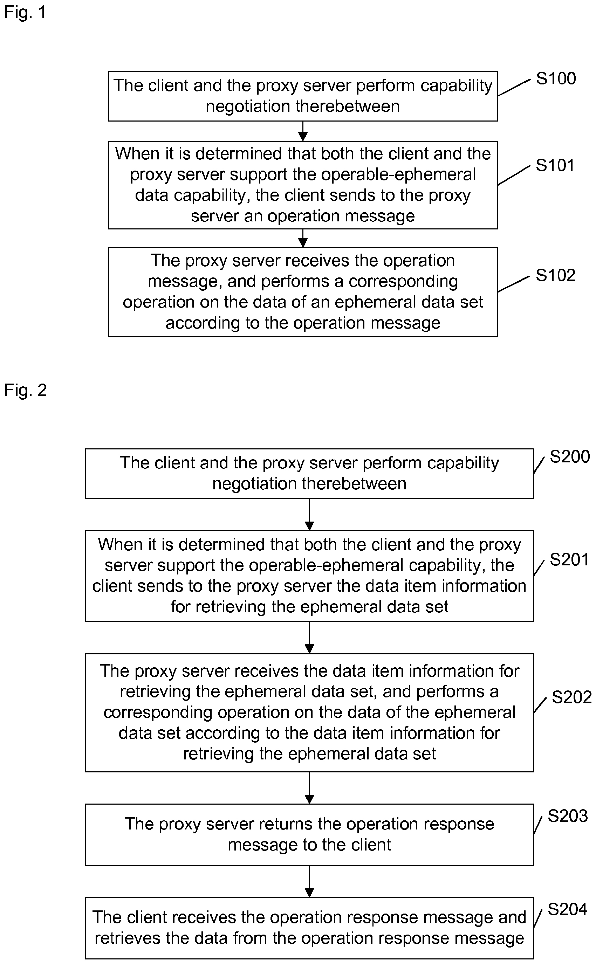

Fig. 1 is a flow chart of implementing the SDN-based data management method according to an embodiment of the disclosure. As shown in Fig. 1, an embodiment of the disclosure provides a SDN-based data management method, which includes the following steps.

In Step S100, the client and the proxy server perform capability negotiation therebetween.

Herein, the capability negotiation between the client and the proxy server is to determine whether both the client and the proxy server support the operable-ephemeral data capability. The operable-ephemeral data capability is also called operable-ephemeral capability.

Specifically, the client and the proxy server send hello messages containing their own capabilities to the other side respectively, and compare the hello messages with their own capabilities respectively, after receiving the hello messages sent from the other side, to determine whether both the client and the proxy server support the operable-ephemeral capability.

It is to be noted that, prior to Step S100, the client and the proxy server implement the establishment of the connection therebetween by transmission of a connection establishment request.

Herein, the operable-ephemeral capability includes support for various operations on the data of the ephemeral data set. The type of operations includes: the operation of getting ephemeral data, the operation of locking ephemeral data, the operation of unlocking ephemeral data, and the operation of editing ephemeral data.

The operation of getting ephemeral data, also known as a get-ephemeral operation, is used to get data of the ephemeral data set.

The operation of locking ephemeral data, also known as a lock-ephemeral operation, locks the data in the specified ephemeral data set and only the client that sends the corresponding locking operation message to the proxy server can send the corresponding modifying operation message to the proxy server to inform the proxy server to perform modification of the data in the locked ephemeral data set, while other clients can only retrieve the data in the locked ephemeral data set.

It is to be noted that the lock-ephemeral operation is generally used to lock the data of the ephemeral data set to be modified before modifying the data of the ephemeral data set so as to avoid the conflict issue caused when the multiple clients simultaneously send modifying operation messages to inform the proxy server to modify the data in the same ephemeral data set. After the data in the specified ephemeral data set has been locked, the locked ephemeral data set will be not released, unless the subsequent unlock operation is performed on the locked ephemeral data set or the connection between the client and the proxy server is disconnected.

The operation of unlocking ephemeral data, also known as the unlock-ephemeral operation, unlocks the data in the locked ephemeral data set and only the client that has previously sent a corresponding locking operation message to the proxy server can unlock the data in the locked ephemeral data set.

The operation of editing ephemeral data, also known as the edit-ephemeral operation, is used to modify the data of a readable and writable node in the ephemeral data set (i.e., the value of the node parameter <ephemeral> is TRUE). Examples of the operation of editing ephemeral data include creating, modifying and/or deleting the protocol status data.

The relevant parameters of the edit-ephemeral operation are explained in the following.

The parameter <operation-type> refers to the operation option and belongs to an optional node. The option for the parameter is merge/replace/none, and the default operation for the parameter is merge. Merge refers to the merge operation, replace refers to the replacement operation, and none refers to no operation.

The parameter <test-option> refers to the test option and belongs to an optional node. The option of the parameter is test-then-set/set/test-only, and the default option of the parameter is set. Test-then-set refers to testing first and then sending data, set refers to directly sending data without testing, and test-only refers to only testing without sending the data.

The parameter <error-option> refers to the error option and belongs to an optional node. The option of the parameter is stop-on-error/continue-on-error, and the default option of the parameter is stop-on-error. Stop-on-error refers to stopping running after an error occurs, and continue-on-error refers to jumping to continue after an error occurs.

The parameter <data> refers to the content of the operation data, that is, the operation body, which is used to specify which specific data operate.

In Step S101, when it is determined through the capability negotiation that both the client and the proxy server support the operable-ephemeral data capability, the client sends to the proxy server an operation message.

Herein, the operation message may be the data item information for retrieving the ephemeral data set. The data item information for retrieving the ephemeral data set includes an operation type, an action domain, and content to be retrieved.

Herein, the operation message may be the data item information for modifying the ephemeral data set. The data item information for modifying the ephemeral data set includes: an operation type; an action domain; and content to be modified, an error option, a test option of the modifying operation.

In Step S102, the proxy server receives the operation message, and performs a corresponding operation on the data of an ephemeral data set according to the operation message.

In an embodiment, when the operation message is the data item information for retrieving the ephemeral data set, the proxy server performs a corresponding operation on the data of an ephemeral data set according to the data item information for retrieving the ephemeral data set.

The step that the proxy server performs a corresponding operation on the data of an ephemeral data set according to the data item information for retrieving the ephemeral data set including: identifying, according to the operation type, a retrieving operation is to be performed; determining the node to be retrieved, to which the content to be retrieved belongs, of the ephemeral data set according to the action domain; collecting the data of the retrieve node according to the content to be retrieved; and forming an operation response message by using the collected data according to the format of the message.

In an embodiment, when the operation message is the data item information for modifying the ephemeral data set, the proxy server performs a corresponding operation on the data of an ephemeral data set according to the data item information for modifying the ephemeral data set.

In the embodiment, the step that the client sends the operation message to the proxy server including: the client sends to the proxy server the data item information for modifying the ephemeral data set.

The step that the proxy server performs a corresponding operation on the data of an ephemeral data set according to the data item information for modifying the ephemeral data set including: identifying that a modifying operation is to be performed according to the operation type; determining the node to be modified, to which the content to be modified belongs, of the ephemeral data set according to the action domain; performing the modifying operation on data of the node to be modified according to the test option, the error option, and the content to be modified of the modifying operation; and recording the result of the modifying operation.

In the embodiment of the disclosure, before the client sends to the proxy server the data item information for modifying the ephemeral data set, the method further includes: the client sends to the proxy server a lock-ephemeral operation message; the proxy server receives the operation message for locking the ephemeral data set; a locking operation is performed on the data of the ephemeral data set according to the lock-ephemeral operation message; and a response message indicating that the locking operation is successful is returned to the client when the locking operation is performed successfully.

In an embodiment, the method further includes: the proxy server returns to the client the result of the modifying operation; the client sends to the proxy server an unlock-ephemeral operation message; the proxy server receives the unlock-ephemeral operation message; an unlocking operation is performed on the data of the ephemeral data set according to the unlock-ephemeral operation message; and a response message indicating that the unlocking operation is successful is returned to the client when the unlocking operation is performed successfully.

An embodiment of the disclosure further provides a computer storage medium having stored computer-executable instructions for executing the SDN-based data management method described in the embodiment of the disclosure.

Fig. 2 is a flow chart of implementing the retrieving operation of the SDN-based data management method according to an embodiment of the disclosure. As shown in Fig. 2, the retrieving operation implemented by the SDN-based data management method according to an embodiment of the disclosure includes the following steps.

In Step S200, the client and the proxy server perform capability negotiation therebetween.

Herein, the capability negotiation between the client and the proxy server is used to determine whether both the client and the proxy server support the operable-ephemeral capability.

In Step S201, when the capability negotiation determines that both the client and the proxy server support the operable-ephemeral capability, the client sends to the proxy server the data item information for retrieving the ephemeral data set.

Herein, data item information for retrieving the ephemeral data set includes an operation type, an action domain, and content to be retrieved. The operation type is a get-ephemeral operation, and the action domain is the region where the node to be retrieved of the ephemeral data set is located. The content to be retrieved belongs to the node.

In Step S202, the proxy server receives the data item information for retrieving the ephemeral data set, and performs a corresponding operation on the data of an ephemeral data set according to the data item information for retrieving the ephemeral data set.

Specifically, it is identified according to the operation type that a retrieving operation is to be performed; the node to be retrieved, to which the content to be retrieved belongs, of the ephemeral data set is determined according to the action domain; the data of the retrieve node is collected according to the content to be retrieved; and an operation response message is formed by using the collected data according to the format of the message.

In Step S203, the proxy server returns the operation response message to the client.

In Step S204, the client receives the operation response message and retrieves the data from the operation response message.

In the following, the current online user information is taken as an example to illustrate that the retrieving operation of the data of the ephemeral data set is implemented using the SDN-based data management method according to the embodiment of the disclosure.

Herein, the operation message sent by the client to the proxy server is the data item information for retrieving the ephemeral data set. The contents to be retrieved includes the user name, the number of the login client, the login manner, the login IP address, the online time, the idle time, the login time, or the like. The operation message is as follows:

```
     <rpc>
     <get-ephemeral>
     <filter type="subtree">
        <user: users xmlns:user="http://www.zte.com.cn/schema/user">
            <user:online-user/>
        </user:users>
     </filter>
     </get-ephemeral>
     </rpc>
```

Further, the proxy server identifies that a retrieving operation is to be performed according to the operation type; determines the node to be retrieved, to which the content to be retrieved belongs, of the ephemeral data set according to the action domain; collects the data of the retrieve node according to the content to be retrieved; and forms an operation response message by using the collected data according to the format of the message, namely, forms an operation response message by using information on the current online user; and then returns the operation response message to the client, wherein the operation response message is as follows:

```
     <rpc-reply>
     <data>
     <user: users xmlns:user="http://www.zte.com.cn/ schema/user">
        <user:online-user>
            <user:username>zte</user:username>
            <user:vtyno>1</user:vtyno>
            <user:access-type>NETCONF</user:access-type>
            <user:ip-addr>192.168.120.2</user:ip-addr>
            <user:online-time>00:00:07</user:online-time>
            <user:idle-time>00:00:00</user:idle-time>
            <user:login-time>2014-04-02 00:09:12</user:login-time>
        </user:online-user>
     </user:users>
     </data>
     </rpc-reply>
```

In addition, if the proxy server does not collect the information on current online user, the operation response message returned to the client is as follows:

```
     <rpc-reply>
     <data>
     </data>
     </rpc-reply>
```

An embodiment of the disclosure further provides a computer storage medium having stored computer-executable instructions for executing the retrieving operation implemented by the SDN-based data management method described in the embodiment of the disclosure.

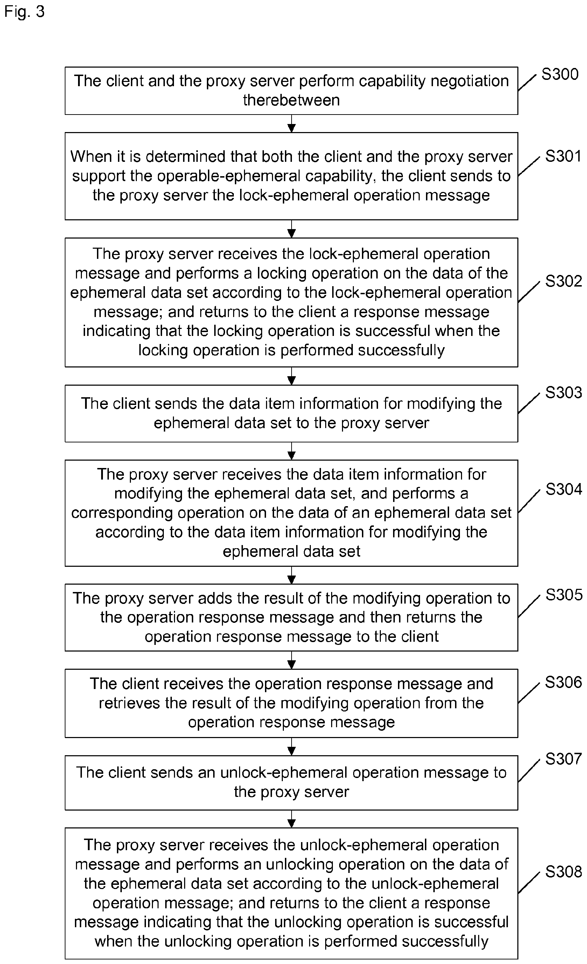

Fig. 3 is a flow chart of implementing the modifying operation of the SDN-based data management method according to an embodiment of the disclosure. As shown in Fig. 3, the modifying operation implemented by the SDN-based data management method according to an embodiment of the disclosure includes the following steps.

In Step 300, the client and the proxy server perform capability negotiation therebetween.

Herein, the capability negotiation between the client and the proxy server is used to determine whether both the client and the proxy server support the operable-ephemeral capability.

In Step S301, when the capability negotiation determines that both the client and the proxy server support the operable-ephemeral capability, the client sends to the proxy server the lock-ephemeral operation message. The operation message is as follows:

```
     <rpc>
     <lock-ephemeral>
         <target><ephemeral/></target>
     </lock-ephemeral>
     </rpc>
```

In Step S302, the proxy server receives the lock-ephemeral operation message and performs a locking operation on the data of the ephemeral data set according to the lock-ephemeral operation message; and returns to the client a response message, i.e., an <ok> message indicating that the locking operation is successful when the locking operation is performed successfully.

Herein, when the locking operation fails, for example, when the data of the ephemeral data set has been locked by other clients, the proxy server returns a response message to the client indicating that the locking operation fails. That is, the proxy server encapsulates a <rpc-error> element containing the detailed error message into the <rpc-reply> element to return to the client. Further, when the client receives a response message, that is returned by the proxy server, indicating that the lock operation fails, the process ends.

In Step S303, the client sends the data item information for modifying the ephemeral data set to the proxy server.

Herein, data item information for modifying the ephemeral data set includes an operation type, an action domain, content to be modified, an error option, a test option of the modifying operation. The operation type is an edit-ephemeral operation, and the action domain is the region where the node to be modified of the ephemeral data set is located. The content to be modified belongs to the node to be modified.

In Step S304, the proxy server receives the data item information for modifying the ephemeral data set, and performs a corresponding operation on the data of an ephemeral data set according to the data item information for modifying the ephemeral data set.

Specifically, it is identified that a modifying operation is to be performed according to the operation type; the node to be modified, to which the content to be modified belongs, of the ephemeral data set is determined according to the action domain; the modifying operation on data of the node to be modified is performed according to the test option, the error option, and the content to be modified of the modifying operation; and the result of the modifying operation is recorded.

Herein, the test option (that is, the parameter <test-option>) of the modifying operation includes three options including: test-then-set, which refers to testing first and then sending data; set, which refers to directly sending data without testing; test-only, which refers to only testing without sending the data. The default option is set.

Herein, the error option includes two options including: stop-on-error, which refers to stopping running after an error occurs; continue-on-error, which refers to, when an error occurs, jumping the error and then continue. The default option is stop-on-error.

In Step S305, the proxy server adds the result of the modifying operation to the operation response message and then returns the operation response message to the cl ient.

Herein, if the modifying operation is performed successfully by the proxy server, the proxy server returns to the client a response message, i.e., an <ok> message, indicating modifying operation is successful.

Herein, if the modifying operation fails by the proxy server, the proxy server returns to the client a response message indicating that the modifying operation fails. That is, the proxy server encapsulates a <rpc-error> element containing the detailed error message into the <rpc-reply> element and return the response message to the client.

In Step S306, the client receives and gets the result of the modifying operation in the operation response message.

Herein, after repeating Steps S303 to S306, the method further includes Step S307. In Step 307, the client sends an unlock-ephemeral operation message to the proxy server. The unlock-ephemeral operation message has the following form:

```
     <rpc>
     <unlock-ephemeral>
         <target><ephemeral/></target>
     </unlock-ephemeral>
     </rpc>
```

In Step S308, the proxy server receives the unlock-ephemeral operation message and performs an unlocking operation on the data of the ephemeral data set according to the unlock-ephemeral operation message; and returns to the client a response message, i.e., an <ok> message, indicating that the unlocking operation is successful when the unlocking operation is performed successfully.

Herein, when the unlocking operation fails, the proxy server returns a response message to the client indicating that the unlocking operation fails. That is, the proxy server encapsulates a <rpc-error> element containing the detailed error message into the <rpc-reply> element and return the response message to the client.

In the following, adding a Routing Information Base, RIB, routing table for a network is taken as an example to illustrate that the modifying operation of the data of the ephemeral data set is implemented using the SDN-based data management method according to the embodiment of the disclosure.

Herein, the operation message sent by the client to the proxy server is the data item information for modifying the ephemeral data set. The contents to be retrieved includes: the destination address is 101.11.1.2, the subnet mask address is 255.255.255.255, the outgoing interface index is 4, the next hop address is 89.89.89.1, the priority is 115, and the metric is 20. The test option of the modifying operation is set, that is, the data will be sent without being tested. The error option is stop-on-error, that is, running will be stopped after an error occurs, and those which have been successfully implemented takes effect immediately. The operation message is as follows:

```
     <rpc>
     <edit-ephemeral>
        <operation-type>merge</operation-type>
        <test-option>set</test-option>
        <error-option>stop-on-error</error-option>
        <data xmlns="urn:ietf:params:xml:ns:sdn:base:1.0">
            <rib-ipv4Route operation-type="create">
                <Dest>101.11.1.2</Dest>
                <Mask>255.255.255.255</Mask>
                <IfIndex>4</IfIndex>
                <NextHop>89.89.89.1 </NextHop>
                <Priority>115</Priority>
                <Metric>20</Metric>
            </rib-ipv4Route>
         </data>
     </edit-ephemeral>
     </rpc>
```

Further, the proxy server identifies that a modifying operation is to be performed according to the operation type. The proxy server determines the node to be modified, to which the content to be modified belongs, of the ephemeral data set according to the action domain. The proxy server performs the modifying operation to the data of node to be modified of the ephemeral data set according to the test option of the modifying operation and the error option. That is, the proxy server successfully adds a new RIB routing table. The proxy server then adds the operation result of successfully adding a new RIB routing table to the operation response message and returns the operation response message to the client. That is, the proxy server responds with <ok> message to the client.

In addition, when the modifying operation fails by the proxy server, if the client has no right to modify the RIB routing table through the proxy server, a <rpc-error> element containing the detailed error message is encapsulated into the <rpc-reply> element and returned to the client. The operation response message is as follows:

```
     <rpc>
        <rpc- error>
            < error-tag > access-denied< /error-tag>
            < error-type > application </error-type>
            <error-severity>error<error-severity>
            < error-info>none</error-info>
        </rpc- error>
     </rpc>
```

An embodiment of the disclosure further provides a computer storage medium having stored computer-executable instructions for executing the modifying operation implemented by the SDN-based data management method described in the embodiment of the disclosure.

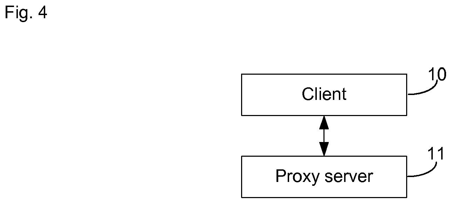

Fig. 4 is a schematic diagram of the structure of the SDN-based data management system according to an embodiment of the disclosure. As shown in Fig. 4, the SDN-based data management system according to an embodiment of the disclosure includes a client 10 and a proxy server 11.

The client 10 is arranged to perform capability negotiation with the proxy server 11. The client 10 is arranged to, when the capability negotiation determines that both the client 10 and the proxy server 11 support the operable-ephemeral capability, send to the proxy server 11 an operation message.

Herein, the capability negotiation between the client 10 and the proxy server 11 is to determine whether both the client 10 and the proxy server 11 support the operable-ephemeral capability.

The proxy server 11 is arranged to perform capability negotiation with the client 10; receive the operation message; and perform a corresponding operation on the data of an ephemeral data set according to the operation message.

Herein, the operation message may be the data item information for retrieving the ephemeral data set. The data item information for retrieving the ephemeral data set includes an operation type, an action domain, and content to be retrieved.

Correspondingly, when the operation message is the data item information for retrieving the ephemeral data set, the proxy server 11 is arranged to perform identify, according to the operation type, that an retrieving operation is to be performed. The proxy server 11 is arranged to determine the node to be retrieved, to which the content to be retrieved belongs, of the ephemeral data set according to the action domain. The proxy server 11 is arranged to collect the data of the retrieve node according to the content to be retrieved, and form an operation response message by using the collected data according to the format of the message.

Herein, the operation message may be the data item information for modifying the ephemeral data set. The data item information for modifying the ephemeral data set includes an operation type, an action domain, content to be modified, an error option, a test option of the modifying operation.

Correspondingly, when the operation message is the data item information for modifying the ephemeral data set, the client 10 is arranged to send to the proxy server 11 the data item information for modifying the ephemeral data set.

The proxy server 11 is arranged to identify that a modifying operation is to be performed according to the operation type. The proxy server 11 is arranged to determine the node to be modified, to which the content to be modified belongs, of the ephemeral data set according to the action domain. The proxy server 11 is arranged to perform the modifying operation on data of the node to be modified according to the test option, the error option, and the content to be modified of the modifying operation; and record the result of the modifying operation.

Herein, the client 10 is further arranged to, before sending the data item information for modifying the ephemeral data set, send to the proxy server 11 the lock-ephemeral operation message.

Correspondingly, the proxy server 11 is further arranged to receive the lock-ephemeral operation message. The proxy server 11 is arranged to perform a locking operation on the data of the ephemeral data set according to the lock-ephemeral operation message. The proxy server 11 is arranged to return to the client 10 a response message indicating that the locking operation is successful when the locking operation is performed successfully.

In an embodiment, the proxy server 11 is arranged to return to the client 10 the result of the modifying operation.

The client 10 is arranged to send to the proxy server 11 the unlock-ephemeral operation message.

Correspondingly, the proxy server 11 is further arranged to receive the unlock-ephemeral operation message and perform an unlocking operation on the data of the ephemeral data set according to the unlock-ephemeral operation message. The proxy server 11 is arranged to return to the client 10 a response message indicating that the unlocking operation is successful when the unlocking operation is performed successfully.

In a practical application, the proxy server 11 may be implemented by a switch, an optical transmission device, or the like.

Those skilled in the art should understand that the embodiments of the disclosure can provide a method, a device or a computer program product. Thus, forms of hardware embodiments, software embodiments or embodiments integrating software and hardware can be adopted in the disclosure. Moreover, a form of the computer program product implemented on one or more computer available storage media (including, but not limited to, a disk memory, an optical memory and the like) containing computer available program codes can be adopted in the disclosure.

The disclosure is described with reference to flowcharts and/or block diagrams of the method, the device and the computer program product according to the embodiments of the disclosure. It should be understood that each flow and/or block in the flowcharts and/or the block diagrams and a combination of the flows and/or the blocks in the flowcharts and/or the block diagrams can be realized by computer program instructions. These computer program instructions can be provided for a general computer, a dedicated computer, an embedded processor or processors of other programmable data processing devices to generate a machine, so that an apparatus for realizing functions assigned in one or more flows of the flowcharts and/or one or more blocks of the block diagrams is generated via instructions executed by the computers or the processors of the other programmable data processing devices.

These computer program instructions can also be stored in a computer readable memory capable of guiding the computers or the other programmable data processing devices to work in a specific mode, so that a manufactured product including an instruction apparatus is generated via the instructions stored in the computer readable memory, and the instruction apparatus realizes the functions assigned in one or more flows of the flowcharts and/or one or more blocks of the block diagrams.

These computer program instructions can also be loaded to the computers or the other programmable data processing devices, so that processing realized by the computers is generated by executing a series of operation steps on the computers or the other programmable devices, and therefore the instructions executed on the computers or the other programmable devices provide a step of realizing the functions assigned in one or more flows of the flowcharts and/or one or more blocks of the block diagrams.

While the foregoing is merely an embodiment of the disclosure, it should be noted that modifications and variations may be made by those skilled in the art without departing from the principles of the embodiments of the disclosure. These modifications and variations should also be considered as the scope of protection of the embodiments of the disclosure.

### INDUSTRIAL APPLICABILITY

According to the embodiment of the disclosure, a client and a proxy server perform capability negotiation therebetween; when it is determined that both the client and the proxy server support the operable-ephemeral data capability, the client sends to the proxy server an operation message; and the proxy server receives the operation message and performs a corresponding operation on the data of an ephemeral data set according to the operation message. In this way, the operable-ephemeral data capability achieves the operations such as retrieving or modifying the data of the ephemeral data set that supports creating, retrieving, updating, and deleting in the SDN to achieve the real-time and effective management of the network device in the SDN.

## Claims

1. A Software Defined Network, SDN-based data management method, comprising:
performing, by a client and a proxy server, capability negotiation therebetween;
when it is determined through the capability negotiation that both the client and the proxy server support the operable-ephemeral data capability, sending, by the client, to the proxy server an operation message; and
receiving, by the proxy server, the operation message, and performing, by the proxy server, a corresponding operation on the data of an ephemeral data set according to the operation message.

2. The method according to claim 1, wherein the operation message is the data item information for retrieving the ephemeral data set; and the data item information for retrieving the ephemeral data set comprises an operation type, an action domain, and content to be retrieved; and
the step of performing, by the proxy server, a corresponding operation on the data of an ephemeral data set according to the operation message comprises: performing, by the proxy server, the corresponding operation on the data in the ephemeral data set according to the data item information for retrieving the ephemeral data set.

3. The method according to claim 2, wherein the step of performing, by the proxy server, the corresponding operation on the data in the ephemeral data set according to the data item information for retrieving the ephemeral data set comprises: identifying, according to the operation type, a retrieving operation is to be retrieved; determining the node to be retrieved, to which the content to be retrieved belongs, of the ephemeral data set according to the action domain; collecting the data of the retrieve node according to the content to be retrieved; and forming an operation response message by using the collected data according to the format of the message.

4. The method according to claim 1, wherein the operation message is the data item information for modifying the ephemeral data set; and the data item information for modifying the ephemeral data set comprises an operation type, an action domain, content to be modified, an error option, a test option of the modifying operation;
the step of sending, by the client, the operation message to the proxy server, comprises: sending, by the client, to the proxy server the data item information for modifying the ephemeral data set; and
the step of performing, by the proxy server, a corresponding operation on the data of an ephemeral data set according to the operation message comprises: performing, by the proxy server, the corresponding operation on the data in the ephemeral data set according to the data item information for modifying the ephemeral data set.

5. The method according to claim 4, wherein before the step of sending, by the client, to the proxy server the data item information for modifying the ephemeral data set, the method further comprises: sending, by the client, to the proxy server an operation message for locking the ephemeral data set; receiving, by the proxy server, the operation message for locking the ephemeral data set; performing, by the proxy server, a locking operation on the data of the ephemeral data set according to the operation message for locking the ephemeral data set; and returning, by the proxy server, to the client a response message indicating that the locking operation is successful when the locking operation is performed successfully.

6. The method according to claim 4 or 5, wherein the step of performing, by the proxy server, the corresponding operation on the data in the ephemeral data set according to the data item information for modifying the ephemeral data set comprises: identifying, according to the operation type, that a modifying operation is to be performed; determining the node to be modified, to which the content to be modified belongs, of the ephemeral data set according to the action domain; performing the modifying operation on data of the node to be modified according to the test option, the error option, and the content to be modified of the modifying operation; and recording the result of the modifying operation.

7. The method according to claim 6, wherein the method further comprises: returning, by the proxy server, to the client the result of the modifying operation; sending, by the client, to the proxy server an operation message for unlocking the ephemeral data set; receiving, by the proxy server, the operation message for unlocking the ephemeral data set; performing, by the proxy server, an unlocking operation on the data of the ephemeral data set according to the operation message for unlocking the ephemeral data set; and returning, by the proxy server, to the client a response message indicating that the unlocking operation is successful when the unlocking operation is performed successfully.

8. A Software Defined Network, SDN-based data management system, comprising: a client and a proxy server, wherein
the client is arranged to perform capability negotiation with the proxy server; when it is determined through the capability negotiation that both the client and the proxy server support the operable-ephemeral data capability, send to the proxy server an operation message; and
the proxy server is arranged to perform the capability negotiation with the client; receive the operation message; and perform a corresponding operation on the data of an ephemeral data set according to the operation message.

9. The system according to claim 8, wherein the operation message is the data item information for retrieving the ephemeral data set; and the data item information for retrieving the ephemeral data set comprises an operation type, an action domain, and content to be retrieved; and
the proxy server is arranged to perform the corresponding operation on the data of the ephemeral data set according to the data item information for retrieving the ephemeral data set.

10. The system according to claim 9, wherein the proxy server is arranged to identify that a retrieving operation is to be performed according to the operation type; determine the node to be retrieved, to which the content to be retrieved belongs, of the ephemeral data set according to the action domain; collect the data of the retrieve node according to the content to be retrieved; and form operation response message by using the collected data according to the format of the message.

11. The system according to claim 8, wherein the operation message is the data item information for modifying the ephemeral data set; and the data item information for modifying the ephemeral data set comprises an operation type, an action domain, content to be modified, an error option, a test option of the modifying operation;
the client is arranged to send to the proxy server the data item information for modifying the ephemeral data set; and
the proxy server is arranged to perform the corresponding operation on the data of the ephemeral data set according to the data item information for modifying the ephemeral data set.

12. The system according to claim 11, wherein the client is arranged to, before sending to the proxy server the data item information for modifying the ephemeral data set, send to the proxy server an operation message for locking the ephemeral data set; and
correspondingly, the proxy server is arranged to receive the operation message for locking the ephemeral data set; perform a locking operation on the data of the ephemeral data set according to the operation message for locking the ephemeral data set; and return to the client a response message indicating that the locking operation is successful when the locking operation is performed successfully.

13. The system according to claim 11 or 12, wherein the proxy server is arranged to identify that a modifying operation is to be performed according to the operation type; determine the node to be modified, to which the content to be modified belongs, of the ephemeral data set according to the action domain; perform the modifying operation on data of the node to be modified according to the test option, the error option, and the content to be modified of the modifying operation; and record the result of the modifying operation.

14. The system according to claim 13, wherein
the proxy server is arranged to return to the client the result of the modifying operation;
the client is arranged to send to the proxy server an operation message for unlocking the ephemeral data set; and
correspondingly, the proxy server is arranged to perform an unlocking operation on the data of the ephemeral data set according to the operation message for unlocking the ephemeral data set; and return to the client a response message indicating that the unlocking operation is successful when the unlocking operation is performed successfully.

15. A computer storage medium having stored computer-executable instructions for executing the Software Defined Network, SDN-based data management method according to any one of claims 1-7.
